# FASCICULE DE BREVET EUROPEEN

(11) **EP 1 955 598 B1**
(45) Date de publication et mention de la délivrance du brevet: **13.07.2011**
(21) Numéro de dépôt: 08000561.4
(22) Date de dépôt: 14.01.2008
(51) Int. Cl.: A23D 7/00, A23D 7/02

(54) **Procédé d'amélioration de la texturation d'émulsions par traitement haute pression**
Verfahren zur Verbesserung der Struktur von Emulsionen durch Hochdruckbehandlung
Method for improving the texturisation of emulsions by high-pressure treatment

(30) Priorité: 12.01.2007 FR 0700228
(43) Date de publication de la demande: 13.08.2008
(73) Titulaire: St. Hubert, 54710 Ludres (FR)
(72) Inventeur: Le Bail, Alain, 44000 Nantes (FR); De Lamballerie, Marie, 44300 Nantes (FR); Cavellec, Aline, 75013 Paris (FR); Marchal, Norbert, 54122 Flin (FR); Verdellet, Pierre, 75016 Paris (FR)
(74) Mandataire: Jouannic, Nathalie

(56) Documents cités:
- EP-A- 0 804 884
- WO-A-2006/133335
- JP-A- 4 187 046
- JP-A- 2003 339 315

## Description

La présente invention concerne un procédé d'amélioration de la texturation d'émulsions (phase aqueuse dans phase matière grasse ou phase matière grasse dans phase aqueuse), et plus particulièrement de la margarine.
L'invention sera plus particulièrement décrite en référence à une margarine, mais l'invention s'applique à toute émulsion, notamment alimentaire, cosmétique ou pharmaceutique.
Une margarine est classiquement une émulsion phase aqueuse dans une phase constituée d'un mélange de matières grasses, c'est-à-dire que les gouttelettes de la partie aqueuse sont dispersées dans un réseau continu de matières grasses partiellement cristallisé. La texture d'une margarine est la résultante du comportement des deux phases : la phase aqueuse et la phase matière grasse qui est un mélange de plusieurs matières grasses présentant des points de fusion plus ou moins élevés.

La production de margarine nécessite la réalisation d'une émulsion contenant environ 40% d'eau et 60% de matières grasses. Ces margarines répondent aux exigences des consommateurs pour des produits allégés en matières grasses et en particulier en matières grasses d'origine animale (matières grasses saturées).

La texture de ces produits est un critère qualitatif important. Le consommateur recherche une certaine fermeté du produit, ce qui est en contradiction avec les critères « santé » qui préconisent que les matières grasses faiblement saturées sont à introduire dans l'alimentation.
Or ces matières grasses faiblement saturées, que l'on retrouve en particulier dans certaines huiles végétales, ont une plage de température de solidification-fusion basse. Pour l'huile de Colza, par exemple, la solidification-fusion a lieu entre -25°C et -10°C, pour l'huile de Tournesol elle a lieu entre -18°C et -10°C. Les industriels sont donc obligés, pour satisfaire les différentes exigences des consommateurs d'une part, et des critères « santé » d'autre part, d'ajouter dans leurs formulations une certaine proportion de matière grasse présentant une température de solidification-fusion supérieure à la température ambiante afin d'obtenir une texture de margarine acceptable.
Les huiles utilisées sont la plupart du temps des huiles d'origine végétale à plus fort degré de graisses saturées comme l'huile de palme ou l'huile de coprah. Cette amélioration de la texture de la margarine ne peut se faire qu'au détriment des critères « santé », et ce problème de l'amélioration de la texture sans dégrader les qualités nutritionnelles est un problème récurrent.

Les margarines sont fabriquées selon un procédé classique, connu de l'homme de l'art, comprenant de préférence au moins les étapes suivantes :
- une étape de préparation de la phase grasse à chaud,
- une étape de préparation de la phase aqueuse,
- l'addition lente de la phase aqueuse dans la phase grasse sous agitation forte pour créer l'émulsion,
- une étape de pasteurisation,
- une étape de refroidissement et de trituration,
- une étape de conditionnement,
- et une étape de stockage.

Lors de la fabrication, des émulsifiants sont, le plus souvent, ajoutés à la phase matière grasse (parfois à la phase aqueuse), puis un brassage intensif des deux phases permet de fractionner les gouttelettes de la phase aqueuse pour obtenir une émulsion qui sera ensuite réfrigérée afin de figer, par cristallisation, la phase matière grasse.

La phase aqueuse va comporter différents ingrédients comme des arômes, des colorants mais surtout des agents épaississants activables par traitement thermique ou déjà activés permettant d'en augmenter la viscosité pour obtenir des textures satisfaisantes. Les agents épaississants activables par traitement thermique sont des agents épaississants susceptibles de gélatiniser lors d'un traitement thermique. On ajoute ainsi de l'amidon qui va être gélatinisé lors du procédé de précuisson de la phase aqueuse.

On perçoit bien que la viscosité de la phase aqueuse doit rester dans une plage raisonnable afin d'autoriser son fractionnement en gouttelettes qui auront au final un diamètre de l'ordre de 5 - 50 µm. Plus la viscosité de la phase aqueuse sera importante, plus la taille des gouttelettes sera importante et moins bonne sera la qualité de l'émulsion formée (margarine risquant « d'exsuder » c'est-à-dire de présenter des perles de liquide, texture trop molle, ...) et donc moins bonne sera la qualité de la texture de la margarine. Les ajouts d'agents épaississants activables par traitement thermique permettant d'augmenter la viscosité sont donc nécessairement limités.

La cristallisation de la phase matière grasse va s'opérer, pendant le procédé, lors de la phase de refroidissement mais aussi au cours du stockage au froid des produits après fabrication. Il faut attendre classiquement 3 à 5 jours avant que la margarine ne durcisse totalement et n'atteigne sa texture finale. En effet, les phénomènes de cristallisation des matières grasses, qui sont des molécules assez grosses, demande un certain temps (phénomène de diffusion de masse pour la croissance des cristaux, ... ).

L'obtention d'une texture satisfaisante est donc difficile et peut être tributaire des phases de stockage.

Le problème de la texturation, exposé ci-dessus dans le cas de la margarine, se pose, de manière générale pour toute émulsion. Les produits concernés peuvent ainsi être aussi bien des produits alimentaires comme du beurre ou des margarines, que des produits cosmétiques ou pharmaceutiques.
La texturation est la résultante du comportement de la phase aqueuse et de la phase de matières grasses qui constituent le produit.

Ainsi, comme cela a été évoqué dans le cas de la margarine, la viscosité de la phase aqueuse doit rester dans une plage raisonnable afin d'autoriser le ou leur fractionnement en gouttelettes. Plus la viscosité de la phase aqueuse sera importante, plus la taille des gouttelettes sera importante et moins bonne sera la qualité de l'émulsion formée et donc moins bonne sera la qualité de sa texture. Les ajouts d'agents épaississants activables par traitement thermique permettant d'augmenter la viscosité sont donc nécessairement limités.
De plus, avec une émulsion dont la phase de matières grasses doit être cristallisée, cette cristallisation va s'opérer, pendant le procédé, lors de la phase de refroidissement, mais aussi au cours du stockage au froid des produits après fabrication. Les phénomènes de cristallisation des matières grasses, qui sont des molécules assez grosses, demande un certain temps (phénomène de diffusion de masse pour la croissance des cristaux, ...). L'obtention d'une texture satisfaisante est donc difficile et peut être tributaire des phases de stockage.

L'objectif de l'invention est d'obtenir une émulsion ayant une meilleure texture, non tributaire des phases de stockage lorsqu'il y a cristallisation de la phase de matières grasses. Tous ces avantages contribuant à l'amélioration de la texture de ladite émulsion.
Un deuxième objectif est de permettre la commercialisation plus rapide du produit fini.

Aussi, un autre objectif de l'invention consiste en l'obtention d'une margarine ayant une meilleure texture, non tributaire des phases de stockage, et ce sans dégrader les qualités nutritionnelles de ce produit.
Un autre objectif est de permettre la commercialisation plus rapide de ce produit fini.

La présente invention concerne donc la mise au point d'un procédé d'amélioration de la qualité des émulsions industrielles, en augmentant la viscosité de la phase aqueuse d'une part, et en améliorant le contrôle de la cristallisation, si elle a lieu, de la phase de matières grasses d'autre part. Ce procédé fait appel à la combinaison de facteurs température et pression spécifiques et également à une formulation spécifique.

La présente invention permet de répondre aux exigences de texture et de commercialisation de produits contenant une émulsion, soit en effectuant, au cours ou après le procédé de fabrication du produit, une étape haute pression permettant d'agir sur la cristallisation de la phase de matières grasses sans avoir modifié la phase aqueuse, soit en ajoutant, lors de la préparation de la phase aqueuse, un ou plusieurs agents épaississants activables par traitement haute pression et en effectuant ensuite une étape de traitement haute pression, au cours ou après le procédé de fabrication du produit, permettant ainsi également d'agir sur l'aspect de la phase aqueuse. Les agents épaississants activables par traitement haute pression sont des agents épaississants susceptibles de gélatiniser ou plus généralement de former un gel lors du traitement haute pression de l'émulsion.

Dans tout le texte, la teneur globale en agents épaississants est la somme des teneurs en agents épaississants activables par traitement thermique et en agents épaississants activables par traitement haute pression.
Le traitement haute pression selon l'invention permet d'obtenir une phase aqueuse ayant une teneur globale en agents épaississants élevée tout en essayant d'avoir une émulsion présentant de fines gouttelettes, car la gélatinisation est effectuée après l'émulsification. Elle permet d'obtenir une émulsion ayant une texture meilleure que les émulsions traditionnelles commercialisées.

Le traitement haute pression selon l'invention permet non seulement d'améliorer la texture, mais aussi de pouvoir commercialiser plus rapidement les produits. En effet, l'émulsion doit atteindre une certaine texture pour pouvoir être manipulée, empilée et transportée les cartons contenant les barquettes de margarine. Dans un procédé classique, il est nécessaire de stocker les produits 3 à 4 jours à une température d'environ 4°C. Dans le cadre de la présente invention, cette phase de durcissement peut être supprimée.

De plus, par rapport aux autres émulsions n'ayant pas subi ce traitement selon l'invention, il apparaît que les émulsions traitées par ledit traitement haute pression selon l'invention supportent bien mieux les étapes de manipulation du consommateur : alternance entre un stockage dans un réfrigérateur domestique (température de 4°C à 6°C) et une consommation à température ambiante (de l'ordre de 20°C), donc une meilleure résistance aux phases successives de montée et de descente en température. Ces opérations conduisent en effet à une fusion partielle des cristaux de la matière grasse et à une texture plus molle. En remettant le produit au réfrigérateur, le phénomène de recristallisation des cristaux fondus va s'opérer, mais il nécessitera une certaine durée.
Ainsi, une émulsion telle que traitée selon le procédé selon l'invention maintient son intégrité et sa texture, et ce même après avoir été exposée pendant plus de deux heures à une température ambiante de 20°C, alors qu'un produit non traité aurait perdu sa cohésion et aurait une texture bien moins ferme.

Dans le cas des margarines, cela permet également un ajout mineur en matières grasses saturées dans la formulation de la margarine en agissant sur la cristallisation de la matière grasse ainsi qu'une commercialisation plus rapide du produit fini (en accélérant grâce à la pression le phénomène de cristallisation des matières grasses) tout en améliorant la texture de la margarine produite.

La pression permet, en effet, de gélatiniser les agents épaississants activables par traitement haute pression, tels que l'amidon. Ce phénomène est bien connu et a été mis en évidence par un certain nombre d'auteurs (Microscopic study of starch gelatinization - Douzals et al., J. Agric. Food Chem., 1996, 44, 1403-1408).

D'autre part, l'augmentation de pression se répercute par une augmentation de la température de fusion des matières grasses. Ce phénomène est décrit dans de nombreux travaux. On observe en moyenne une augmentation de la température de cristallisation d'environ 4.10⁻² °C/MPa et ce pour la plupart des matières grasses.
Soit une matière grasse encore fluide à température ambiante et à pression atmosphérique à laquelle on applique un traitement haute pression. En augmentant la pression, la température de la matière grasse va augmenter du fait de la compressibilité de l'huile, mais l'écart de température entre la matière grasse et l'environnement (fluide utilisé pour la pressurisation) augmentant, un flux thermique va s'établir assurant l'évacuation de chaleur de la matière grasse et ainsi son maintien à une température presque constante. Une fois la pression suffisamment élevée pour que la température de solidification-fusion soit supérieure à la température de la matière grasse, la cristallisation de la matière grasse va s'amorcer et s'accélérer au fur et à mesure que la pression augmente. Il est donc physiquement possible de cristalliser une matière grasse en la traitant à haute pression. Lors de la détente (retour vers la pression atmosphérique), le phénomène inverse risque de se produire. Il faudra donc refroidir la matière grasse sous pression à l'état solide ou partiellement solide avant de relâcher la pression. Cet effet offre un avantage technologique important (le produit est commercialisable dès sa sortie de ligne de production) et est également en mesure d'offrir un avantage en terme de texture car la cinétique de cristallisation obtenue par haute pression est très rapide.

Ce traitement permet d'atteindre deux objectifs : il s'agit d'une part de gélatiniser le ou les agents épaississants activables par traitement haute pression, si il ou ils ont été ajoutés après la phase de chauffage, afin d'augmenter la viscosité de la phase aqueuse de l'émulsion, et d'autre part de provoquer la cristallisation de la phase de matières grasses par le traitement haute pression. Le procédé selon l'invention permet ainsi d'accélérer la cristallisation de la phase de matières grasses, d'augmenter la viscosité de la phase aqueuse et donc la texture de l'émulsion, et au final de pouvoir commercialiser rapidement le produit.

Il est évident que le traitement haute pression peut être appliqué à l'émulsion sans avoir, au préalable, ajouté d'agents épaississants activables par traitement haute pression. Le procédé permet alors d'améliorer la vitesse de cristallisation et également d'améliorer la texture de l'émulsion grâce à une cinétique de cristallisation élevée.

Ainsi, le procédé selon l'invention est un procédé d'amélioration de la texture d'une émulsion préparée à partir d'une phase aqueuse et d'une phase de matières grasses, qui se caractérise en ce que un traitement haute pression est effectué sur l'émulsion, dans une enceinte maintenue à température constante, ledit traitement étant suivi d'une phase de réfrigération permettant de finaliser la cristallisation de la phase de matières grasses de ladite émulsion.
Le traitement haute pression se fait à un palier d'une valeur comprise entre 200 et 600 MPa.

Par phase de réfrigération, on entend une réfrigération à une température « de froid positif ou négatif ».
Par « froid négatif », il s'agit d'une température comprise entre -20°C et 0°C, de préférence -18°C et -5°C.
Par « froid positif », il s'agit d'une température comprise entre 0°c et 10° C, de préférence entre 2°C et 6°C.

Comme dit précédemment, dans le cadre de la présente invention, les émulsions subissant ledit traitement haute pression peuvent être des produits alimentaires tels que par exemples de la margarine ou du beurre, des produits cosmétiques ou pharmaceutiques.
Les émulsions auxquelles peut être appliqué le traitement haute pression selon l'invention se caractérisent en ce que leur procédé de fabrication comporte au moins les étapes suivantes :
- une étape de préparation de la phase grasse à chaud,
- une étape de préparation de la phase aqueuse,
- l'addition lente de la phase aqueuse dans la phase grasse sous agitation forte pour créer l'émulsion,
- une étape de pasteurisation,
- une étape de refroidissement et de trituration,
- une étape de conditionnement,
- et une étape de stockage.

Le procédé selon l'invention peut être mis en oeuvre selon plusieurs modes.
Dans un premier mode, la phase aqueuse, selon l'invention, contient, un ou plusieurs agents épaississants activables par traitement thermique, souvent traités et prégélatinisés, qui gélatinisent thermiquement lors de la précuisson de ladite phase.
Dans un deuxième mode, la phase aqueuse, selon l'invention, contient, un ou plusieurs agents épaississants activables par traitement thermique, souvent traités et prégélatinisés, qui gélatinisent lors de la précuisson de ladite phase, ainsi qu'un ou plusieurs agents épaississants activables par traitement haute pression, qui sont introduits dans la phase aqueuse, à la fin de la phase de précuisson.
Dans un troisième mode de réalisation, la phase aqueuse, selon l'invention, contient un ou plusieurs agents épaississants activables par traitement haute pression, qui sont introduits dans la phase aqueuse, à la fin de la phase de précuisson.
Dans un quatrième mode, la formulation de l'émulsion ne contient pas d'agents épaississants activables ni par traitement thermique ni par traitement haute pression.

Si un ou plusieurs agents épaississants activables par traitement haute pression sont ajoutés à la phase aqueuse au cours de procédé, cet ajout est effectué à la fin de l'étape de précuisson de ladite phase, lorsque la température de ladite phase a été abaissée en dessous de la température de gélatinisation du ou des agents épaississants activables par traitement haute pression.
Le ou les agents épaississants activables par traitement haute pression, non gélatinisés, ainsi dispersés, ne modifient pas significativement la viscosité de la phase aqueuse qui pourra être dispersée en utilisant un procédé conventionnel lors de la phase d'émulsification. Ce ou ces agents épaississants activables par traitement haute pression additionnels sont présents dans des proportions variables en fonction des viscosités recherchées pour la phase aqueuse.
Le ou les agents épaississants activables par traitement haute pression peuvent avoir été modifiés physiquement ou chimiquement afin de les rendre plus sensibles au traitement par haute pression.
Par traitement physique, on entend un traitement mécanique ou un traitement thermique à une température inférieure à la température de gélatinisation et dans des conditions particulières d'hydratation qui permettent de ne pas gélatiniser lesdits agents épaississants, mais de les rendre plus sensibles à la pression.

Plus précisément, le ou les agents épaississants peuvent avoir reçu préalablement à leur dissolution dans la phase aqueuse un traitement spécifique tel que :
- un traitement thermique partiel dans des conditions d'hydratation n'entraînant pas la gélatinisation,
- un traitement physique de cisaillement,
- un traitement physique de détente instantanée contrôlée - (abrégé « procédé DIC »),
- un traitement mécanique de broyage spécifique,
- un traitement par attaque enzymatique dans des conditions d'hydratation adaptées,
et ce afin d'accroître leur sensibilité au traitement haute pression qu'ils recevront ultérieurement, permettant d'obtenir une viscosité et des propriétés rhéologiques de la phase aqueuse aussi élevées que possibles avec un traitement à une pression aussi basse que possible.

Il est aussi à préciser que le ou lesdits agents épaississants activables par traitement haute pression possèdent une distribution de taille particulaire (comme par exemple les granules d'amidon, ou de manière générale les granules d'agent épaississant) telle que la quantité d'eau disponible dans les gouttelettes qui formeront l'émulsion après émulsification et avant le traitement haute pression soit suffisante pour assurer la gélatinisation de ou des agents épaississants, et ce dans les conditions optimales susmentionnées, à savoir conduisant à l'obtention d'une viscosité et des propriétés rhéologiques de la phase aqueuse aussi élevées que possibles.

A titre d'exemple, il est connu de modifier les amidons, afin d'adapter leurs propriétés fonctionnelles telles que la solubilité, la texture, les propriétés rhéologiques, la tolérance à la chaleur (Rutenberg, M. W., & Solarek, D. (1984). Starch derivatives: Production and uses. In R. L. Whistler (Ed.), Starch: Chemistry and Technology (pp. 312-388). New York: Academic Press).

Le ou les agents épaississants activables par traitement thermique et le ou les agents épaississants activables par traitement haute pression peuvent être identiques. Mais le ou les agents épaississants activables par traitement haute pression ne peuvent pas être traités ni prégélatinisés et doivent être incorporés à la fin de l'étape de précuisson de la phase aqueuse, sinon la viscosité de ladite phase sera trop élevée ne permettant pas de faire ensuite une bonne émulsion.

Le ou les agents épaississants activables par traitement haute pression sont choisis dans le groupe composé, entre autres, de la gélatine, des amidons tels que ceux parmi l'amidon de blé, l'amidon de riz, l'amidon d'amaranthus (*Amaranthus cruentus L*), l'amidon de pomme de terre, des hydrocolloïdes (carraghénanes, alginates, ...) et/ou des fibres. Ils peuvent éventuellement être associés à des agents chimiques conduisant à la formation de gels ou de systèmes à forte viscosité (par exemple du calcium pour un alginate).

En milieu fortement hydraté (suspension d'amidon dans l'eau à 15-20% en poids), la gélatinisation de l'amidon de blé est quasiment totale lorsqu'une pression de 500 MPa est atteinte (essais à température ambiante). L'amidon de pomme de terre semble plus résistant et nécessite d'atteindre une pression de 800 MPa à température ambiante. Quelques essais préalables ont montré qu'une suspension d'amidon de blé natif (suspension dans l'eau à 50% en poids) pouvait être gélatinisée à 83% après un traitement de 180 sec à 600 MPa.

Dans un mode de réalisation, le ou les agents épaississants activables par traitement haute pression sont ajoutés en des proportions comprises entre moins de 0,1% et environ 20% en masse par rapport à la phase aqueuse.
Dans autre mode de réalisation, il est ajouté 12% en masse par rapport à la phase aqueuse d'un agent épaississant activable par traitement haute pression.

Dans un autre mode de réalisation, le traitement haute pression se fait à un palier d'une valeur comprise entre 400 et 600 MPa.

Dans un mode de réalisation, le traitement haute pression suivi de la phase de réfrigération sont effectués après une phase de conditionnement final de l'émulsion.

L'enceinte de traitement haute pression est maintenue à une température inférieure à 40°C.
Dans un mode de réalisation, l'enceinte de traitement haute pression est maintenue à une température comprise entre 0°C et 20°C.

Ce traitement a une durée comprise entre quelques dizaines de secondes à quelques dizaines de minutes.
Dans un mode de réalisation, le traitement haute pression dure 3 minutes.

Le traitement haute pression peut comprendre plusieurs cycles de montée et de descente en pression sans nécessairement revenir à la pression atmosphérique.

Dans un mode de réalisation de l'invention, le traitement haute pression est réalisé sur une émulsion disposée dans une barquette en plastique semi-rigide tel que polyester et/ou polyéthylène haute densité, recouverte d'un film plastique soudé par la chaleur avant ledit traitement haute pression, et ce afin d'isoler ladite émulsion du fluide de pressurisation.

Le taux de remplissage de ladite barquette en volume peut être compris entre 80% et 100% du volume de ladite barquette.

Un avantage de l'invention est que la haute pression est connue pour inactiver les microorganismes à l'état végétatif. Le traitement haute pression envisagé est donc susceptible de réduire la charge microbiologique de l'émulsion.

Du gaz peut être dissous dans la phase aqueuse ou dans la phase de matières grasses, ayant pour effet de diminuer la tension de surface entre la phase de matières grasses et la phase aqueuse, permettant ainsi une meilleure émulsification.
Dans un mode de réalisation, le gaz dissous est du dioxyde de carbone.

L'émulsion susceptible d'être obtenue par le procédé selon l'invention peut être un produit alimentaire, cosmétique, pharmaceutique ou une graisse pour usage mécanique.

Elle peut consister en une margarine ou un beurre.

La margarine a une composition de base classique caractérisée en ce que sa teneur globale en agents épaississants est d'au moins 6,1% en masse par rapport à la phase aqueuse.

L'invention sera mieux comprise à l'aide des exemples, effectués sur des systèmes modèles d'émulsionnés, présentés ci-après. HHP signifie « High Hydrostatic Pressure » dans tout le reste du texte, et se réfère à un niveau de pression compris entre 200 et 600 MPa.

Dans l'ensemble des exemples ci-dessous, les émulsions ont été mises en place dans une barquette en plastique semi rigide (en polyester, polyéthylène haute densité) qui était couverte d'un film plastique souple (tel que du polyester et/ou du polyéthylène haute densité), et qui était scellé thermiquement sur la barquette. Le taux de remplissage de la barquette par l'émulsion était compris entre 80 et 100%, afin de limiter l'effet de compression du volume gazeux lors du traitement haute pression. En effet, la compression de ce volume gazeux entraîne une déformation de la barquette pouvant induire une rupture du film plastique souple ou même une rupture de la barquette.

Exemple 1 : Le traitement haute pression a été réalisé sur une « margarine commerciale » dénommée ci-après « Produit A », à laquelle a été ajouté 12% (en masse par rapport à la phase aqueuse) d'amidon de blé comme agent épaississant activable par traitement haute pression.
La recette indicative de la margarine utilisée est fournie dans le tableau 1. Les pourcentages sont exprimés en masse par rapport à la composition totale.

**Tableau 1 : Composition du « Produit A »**

| | Produit A | % |
|---|---|---|
| Composition de la phase de matières grasses (30 à 50 %) | Huiles végétales (Huile colza, Coprah, Stéarine de palme) Matière grasse laitière anhydre (ou huile de beurre) Emulsifiant Arôme et colorant vitaminé | 30 à 40 |
| Composition de la phase aqueuse (50 à 70 %) | Babeurre Eau Amidon modifié prégélatinisé Sel Lait en poudre Conservateur Correcteur d'acidité Arôme | 10 à 20 1 à 3 (soit 1,4 à 6% en masse par rapport à la phase aqueuse) |

Lors du traitement de la phase aqueuse, après avoir abaissé la température de la phase aqueuse (vers 55°C), un agent épaississant activable par traitement haute pression a été ajouté (amidon de blé). Cet amidon n'était ni gélatinisé ni prégélatinisé : il n'a donc pas significativement modifié la viscosité de la phase aqueuse.

Ensuite, le procédé de fabrication a été le même que pour le procédé conventionnel, à savoir mise en émulsion et phases de refroidissement et de trituration.
Après conditionnement final, les barquettes de margarine ont subi un traitement haute pression suivi d'un stockage au froid à 4°C (soit des conditions de stockage industriel pour une phase de stabilisation au froid).
Les essais ont été réalisés dans un pilote haute pression de 3,5 litres de diamètre intérieur 12 cm et de hauteur utile d'environ 30 cm (ACB Pressure Systems, France). Dans l'enceinte haute pression, deux barquettes de 250 g ont été traitées de manière simultanée. Dans un procédé industriel, il faudra utiliser une eau plus froide (0°C ou 4°C) afin d'amplifier l'effet haute pression et également optimiser le taux de remplissage de l'enceinte car le coût de traitement en sera abaissé d'autant.

Un traitement haute pression de 600 MPa pendant 180 secondes dans une enceinte maintenue à une température de 10°C a été appliqué aux barquettes de « Produit A ». Les échantillons (barquettes) de margarine ont été ensuite analysés par calorimétrie différentielle afin d'analyser le vieillissement du produit. Le vieillissement du produit représente la phase de stockage après production pendant laquelle la cristallisation partielle de la phase de matières grasses s'opère. Ces phénomènes de cristallisation sont plus ou moins rapides, en fonction du niveau de la température de stockage et en fonction de la manière dont la cristallisation (apparition de germes de cristaux) a été réalisée lors du procédé de fabrication.
Des mesures réalisées en calorimétrie différentielle à balayage ont été réalisées en utilisant le cycle de traitement calorimétrique suivant : palier de 10 minutes à 0°C, réchauffage à 3°C/min jusqu'à 50°C, palier de 10 minutes à 50°C.

Des thermogrammes ont été réalisés grâce à un calorimètre différentiel sur différentes variantes de « Produit A ».

La mesure de calorimétrie permet de mesurer la quantité de chaleur nécessaire à la réalisation d'un changement d'état (en l'occurrence fusion de la matière grasse ou énergie de gélatinisation de l'amidon), grandeur appelée enthalpie de fusion des lipides contenus dans la phase de matières grasses telle que présentée dans les tableaux 2 et 4 ci-après, et de déterminer la température à laquelle a lieu le phénomène. L'enthalpie représente l'intégration dans le temps du signal calorimétrique (W/g).

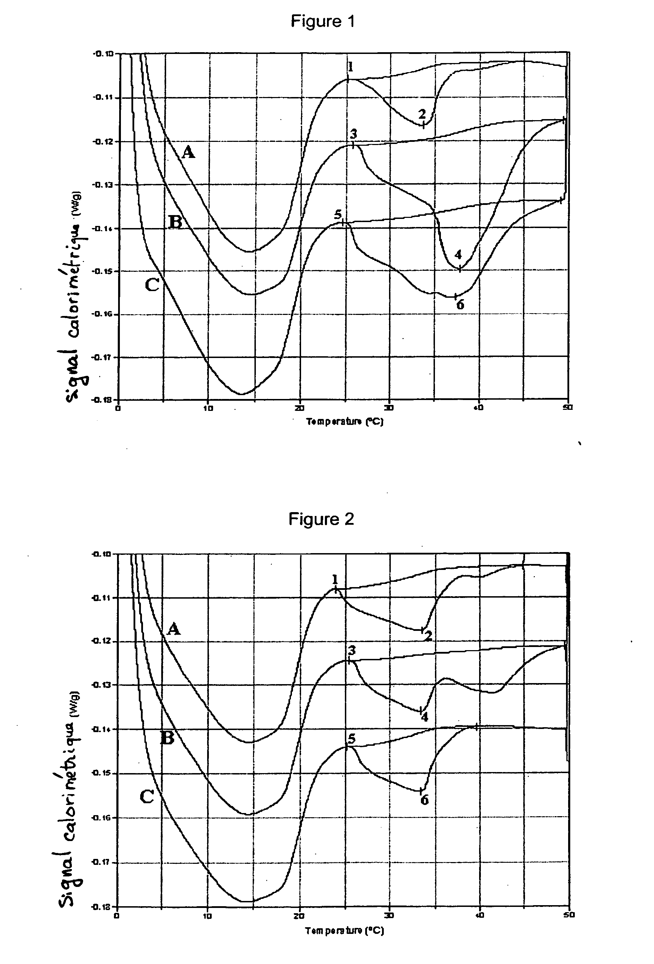

Les deux pics qui apparaissent dans les thermogrammes (Figures 1 à 5) correspondent à la fusion de l'huile de coprah (pic n°1=15°C) et de la matière grasse allégée (pic n°2=34°C) respectivement.
La figure 1 présente le thermogramme pour le « Produit A » standard. La courbe A a été réalisée en début du stockage ; la température en début du pic n° (1) est de 27,11°C et au centre du pic n° (2) de 33,73°C. La variation d'enthalpie de fusion des lipides contenus dans la phase de matières grasses est de 1,657 J/g. La courbe B a été réalisée à environ 24 heures de stockage ; la température en début du pic n° (3) est de 34,18°C et au centre du pic n° (4) de 37,82°C. La variation d'enthalpie de fusion des lipides contenus dans la phase de matières grasses est de 6,380 J/g. La courbe C a été réalisée à environ 48 heures de stockage ; la température en début du pic n° (5) est de 25,35°C et au centre du pic n° (6) de 37,25°C. La variation d'enthalpie de fusion des lipides contenus dans la phase de matières grasses est de 5,211 J/g.
La figure 2 représente le thermogramme pour le « Produit A » auquel a été ajouté 12% (en masse par rapport à la phase aqueuse) d'amidon de blé. La courbe A a été réalisée en début du stockage ; la température en début du pic n° (1) est de 24,12°C et au centre du pic n° (2) de 33,58°C. La variation d'enthalpie de fusion des lipides contenus dans la phase de matières grasses est de 2,220 J/g. La courbe B a été réalisée à environ 24 heures de stockage ; la température en début du pic n° (3) est de 25,93°C et au centre du pic n° (4) de 33,49°C. La variation d'enthalpie de fusion des lipides contenus dans la phase de matières grasses est de 3,317 J/g. La courbe C a été réalisée à environ 48 heures de stockage ; la température en début du pic n° (5) est de 25,90°C et au centre du pic n° (6) de 33,48°C. La variation d'enthalpie de fusion des lipides contenus dans la phase de matières grasses est de 1,772 J/g.

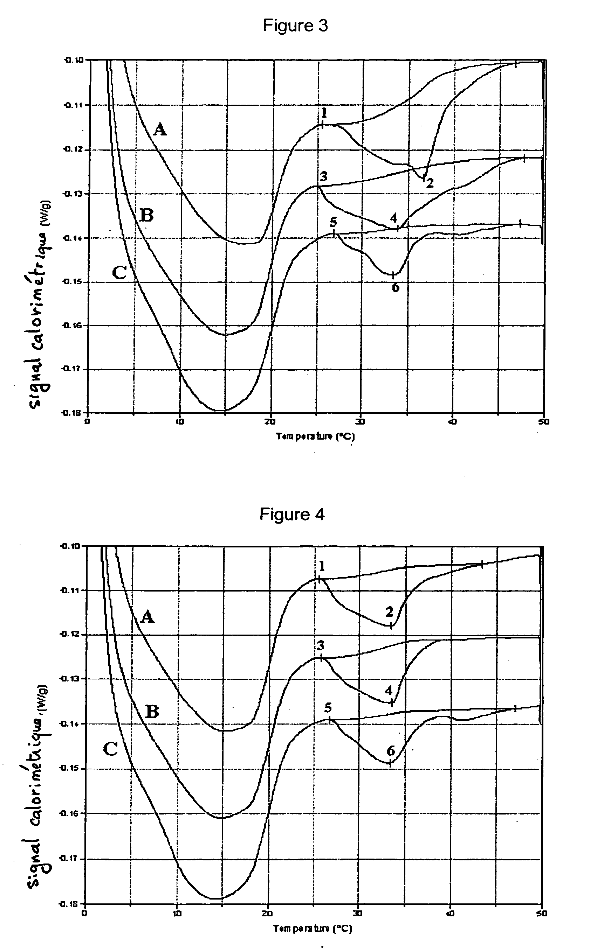

La figure 3 représente le thermogramme pour le « Produit A » standard ayant subi un traitement haute pression (180 secondes à 600 MPa). La courbe A a été réalisée en début du stockage ; la température en début du pic n° (1) est de 31,77°C et au centre du pic n° (2) de 36,69°C. La variation d'enthalpie de fusion des lipides contenus dans la phase de matières grasses est de 2,963 J/g. La courbe B a été réalisée à environ 2 heures de stockage ; la température en début du pic n° (3) est de 25,20°C et au centre du pic n° (4) de 33,99°C. La variation d'enthalpie de fusion des lipides contenus dans la phase de matières grasses est de 2,839 J/g. La courbe C a été réalisée à environ 24 heures de stockage ; la température en début du pic n° (5) est de 28,85°C et au centre du pic n° (6) de 33,45°C. La variation d'enthalpie de fusion des lipides contenus dans la phase de matières grasses est de 1,426 J/g.
La figure 4 présente le thermogramme pour le « Produit A » auquel a été ajouté 12% (en masse par rapport à la phase aqueuse) d'amidon de blé et qui a subi un traitement haute pression (180 secondes à 600 MPa). La courbe A a été réalisée en début du stockage ; la température en début du pic n° (1) est de 26,06°C et au centre du pic n° (2) de 33,51 °C. La variation d'enthalpie de fusion des lipides contenus dans la phase de matières grasses est de 1,936 J/g. La courbe B a été réalisée à environ 2 heures de stockage ; la température en début du pic n° (3) est de 26,34°C et au centre du pic n° (4) de 33,57°C. La variation d'enthalpie de fusion des lipides contenus dans la phase de matières grasses est de 1,628 J/g. La courbe C a été réalisée à environ 24 heures de stockage ; la température en début du pic n° (5) est de 27,18°C et au centre du pic n° (6) de 33,44°C. La variation d'enthalpie de fusion des lipides contenus dans la phase de matières grasses est de 1,584 J/g.

Le Tableau 2 montre un récapitulatif de l'évolution de température et d'enthalpie de fusion des lipides contenus dans la phase de matières grasses pendant le vieillissement des différentes variantes du « Produit A ».

**Tableau 2 : Récapitulatif de l'évolution de température et d'enthalpie de fusion des lipides contenus dans la phase de matières grasses pendant le vieillissement des différentes variantes du « Produit A »**

| **Produit** | **A Standard** | | **A+12% Blé** | | **A Standard + HHP** | | **A+ 12% Blé + HHP** | |
|---|---|---|---|---|---|---|---|---|
| | **T (°C)** | **E (J/g)** | **T (°C)** | **E (J/g)** | **T (°C)** | **E (J/g)** | **T (°C)** | **E (J/g)** |
| **Courbe A** | 33,73 | 1,657 | 33,58 | 2,220 | 36,69 | 2,963 | 33,51 | 1,936 |
| **Courbe B** | 37,82 | 6,380 | 33,49 | 3,317 | 33,99 | 2,839 | 33,57 | 1,628 |
| **Courbe C** | 37,25 | 5,211 | 33,48 | 1,772 | 33,45 | 1,426 | 33,44 | 1,548 |
| **Moyenne** | **36,27** | **4,42** | **33,52** | **2,44** | **34,71** | **2,41** | **33,51** | **1,70** |
| **Écart type** | **±1,81** | **±2,01** | **±0,04** | **±0,65** | **±1,42** | **±0,70** | **±0,05** | **± 0,17** |

Le « Produit A » standard est le produit le plus instable, les écarts de température et d'enthalpie de fusion des lipides contenus dans la phase de matières grasses pendant les trois jours de suivi sont de 2°C et de 2 J/g, respectivement. Par contre, le « Produit A », auquel a été ajouté 12% (en masse par rapport à la phase aqueuse) d'amidon de blé et qui a subi un traitement haute pression (180 secondes à 600MPa dans une enceinte maintenue à une température de 10°C), est le produit le plus stable, les écarts sont seulement de 0,05°C et de 0,17 J/g.

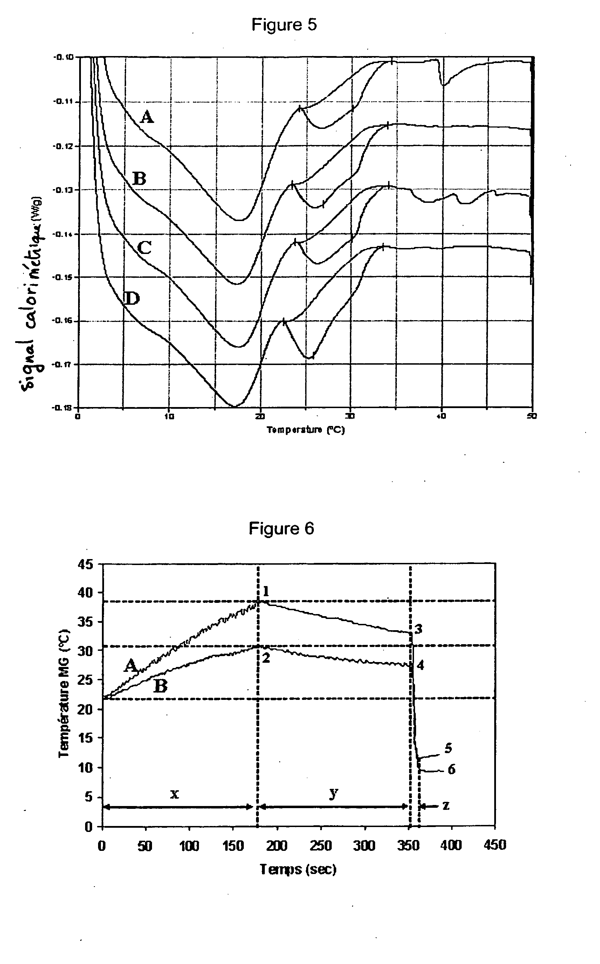

La Figure 5 fait une comparaison des thermogrammes pour le « Produit A » auquel a été ajouté 12% (en masse par rapport à la phase aqueuse) d'amidon de blé qui n'a pas subi de traitement haute pression (Courbe A en début de stockage, courbe B à 24 heures de stockage et courbe C à 48 heures de stockage) et qui a subi un traitement haute pression (Courbe D en début de stockage). Cette figure nous permet de démontrer que l'ajout d'amidon plus un traitement haute pression produisent une augmentation de l'enthalpie liée au phénomène de fusion de la phase de matières grasses des émulsions analysées.

La Figure 6 montre l'évolution de la température dans les émulsions pendant le traitement haute pression. Dans le pilote haute pression, la température de l'eau (moyen de pressurisation) et de l'enceinte haute pression a été ajustée à 20-21 °C. La courbe A représente l'évolution de la température pendant un essai à 600 MPa sur le « Produit A ». Pendant la montée en pression (x) d'une durée de 174 secondes, l'émulsion se réchauffe jusqu'à 39°C (1). Au cours du palier (y) d'une durée de 180 secondes, l'émulsion se refroidit jusqu'à 33°C (3) et finalement pendant le relâchement de la pression (z), l'émulsion se refroidit jusqu'à 9°C (6). La courbe B représente l'évolution de la température pendant un essai à 400 MPa sur le « Produit A ». Pendant la montée en pression (x) d'une durée de 174 secondes, l'émulsion se réchauffe jusqu'à 31 °C (2). Au cours du palier (y) d'une durée de 180 secondes, l'émulsion se refroidit jusqu'à 28°C (4) et finalement pendant le relâchement de la pression (z), l'émulsion se refroidit jusqu'à 12,4°C (5).

On observe une descente en température importante lors du relâchement de pression. En fait la cristallisation s'opère lors de la phase de montée en pression bien qu'il y ait un échauffement. Le refroidissement sous pression permet de poursuivre la cristallisation dans des conditions particulières (la montée en pression a induit une cristallisation partielle) et accélérée grâce à la présence des cristaux formés lors de la montée en pression.

Exemple 2 : Le traitement haute pression a été réalisé sur une margarine commerciale « Produit B » à laquelle a été rajouté 12% (en masse par rapport à la phase aqueuse) d'amidon de blé comme agent épaississant activable par traitement haute pression.

La recette indicative de la margarine utilisée est fournie dans le tableau 3. Les pourcentages sont exprimés en masse par rapport à la composition totale.

**Tableau 3 : Composition du « Produit B »**

| | Produit B | % |
|---|---|---|
| Composition de la phase de matières grasses (50 à 70 %) | Huiles végétales (Huile colza, stéarine de palme, stéarine de palmiste, huile de palme, tournesol oléique) Emulsifiant Arome et colorant | 50 à 59 |
| Composition de la phase aqueuse (30 à 50 %) | Eau Sel Conservateur (sorbate de potassium) Correcteur d'acidité (acide lactique/citrate) Arôme | 30 à 40 |

Le protocole appliqué au « Produit A » a été appliqué de manière identique au « Produit B ».

Un traitement haute pression de 4000 bars pendant 180 secondes a été appliqué aux barquettes de « Produit B ». Les échantillons (barquettes) de margarine ont été ensuite analysés par calorimétrie différentielle afin de mesurer l'énergie liée au phénomène de fusion des matières grasses cristallisées après la fabrication de l'émulsion, après le traitement haute pression (si un tel traitement était réalisé) et lors du stockage à une température d'ambiance de 4°C environ. Des mesures réalisées en calorimétrie différentielle à balayage ont été réalisées en utilisant le cycle de traitement calorimétrique suivant : palier de 10 minutes à 0°C, réchauffage à 3°C/min jusqu'à 50°C, palier de 10 minutes à 50°C.

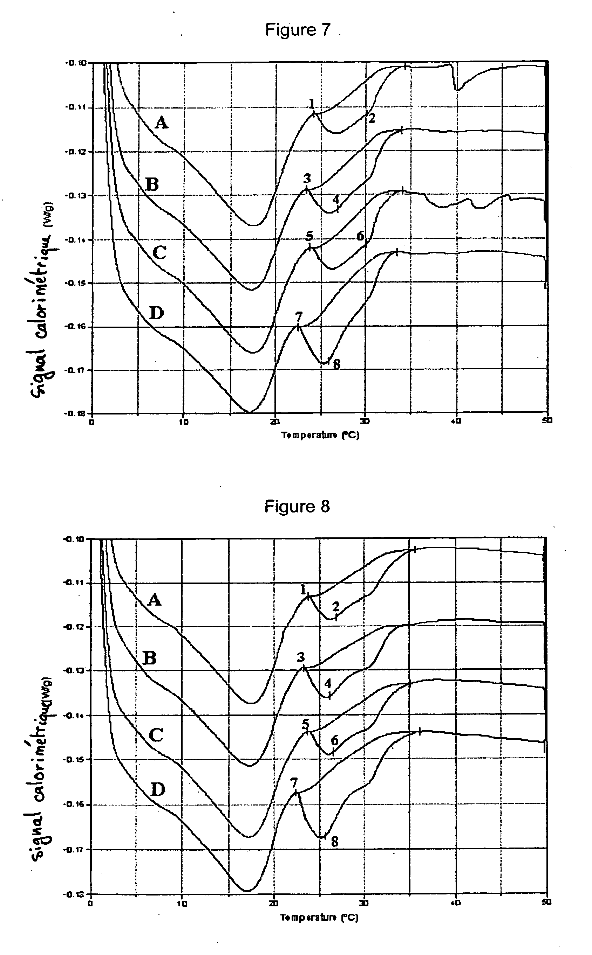

Des thermogrammes ont été réalisés grâce à un calorimètre différentiel sur différentes variantes de « Produit B ».
Les deux pics qui apparaissent dans les thermogrammes (Figures 7 à 10) correspondent respectivement à la fusion de la fraction palmiste (pic n°1=18°C) et de la fraction palme (pic n°2=25°C) respectivement.

La figure 7 présente le thermogramme pour le « Produit B » standard. La courbe A a été réalisée en début du stockage ; la température en début du pic n° (1) est de 24,37°C et au centre du pic n° (2) de 30,14°C. La variation d'enthalpie de fusion des lipides contenus dans la phase de matières grasses est de 0,9388 J/g. La courbe B a été réalisée à environ 24 heures de stockage ; la température en début du pic n° (3) est de 23,58°C et au centre du pic n° (4) de 26,86°C. La variation d'enthalpie de fusion des lipides contenus dans la phase de matières grasses est de 1,152 J/g. La courbe C a été réalisée à environ 72 heures de stockage ; la température en début du pic n° (5) est de 24,12°C et au centre du pic n° (6) de 30,16°C. La variation d'enthalpie de fusion des lipides contenus dans la phase de matières grasses est de 1,069 J/g. La courbe D a été réalisé à environ 144 heures de stockage ; la température en début du pic n° (7) est de 22,64°C et au centre du pic n° (8) de 25,88°C. La variation d'enthalpie de fusion des lipides contenus dans la phase de matières grasses est de 1,603 J/g.
La figure 8 présente le thermogramme pour le « Produit B » auquel a été ajouté 12% (en masse par rapport à la phase aqueuse) d'amidon de blé. La courbe A a été réalisée en début du stockage ; la température en début du pic n° (1) est de 24,03°C et au centre du pic n° (2) de 26,81 °C. La variation d'enthalpie de fusion des lipides contenus dans la phase de matières grasses est de 1,106 J/g. La courbe B a été réalisée à environ 24 heures de stockage ; la température en début du pic n° (3) est de 23,53°C et au centre du pic n° (4) de 26,14°C. La variation d'enthalpie de fusion des lipides contenus dans la phase de matières grasses est de 1,211 J/g. La courbe C a été réalisée à environ 72 heures de stockage ; la température en début du pic n° (5) est de 24,04°C et au centre du pic n° (6) de 26,52°C. La variation d'enthalpie de fusion des lipides contenus dans la phase de matières grasses est de 1,039 J/g. La courbe D a été réalisé à environ 144 heures de stockage ; la température en début du pic n° (7) est de 22,71 °C et au centre du pic n° (8) de 25,59°C. La variation d'enthalpie de fusion des lipides contenus dans la phase de matières grasses est de 1,849 J/g.

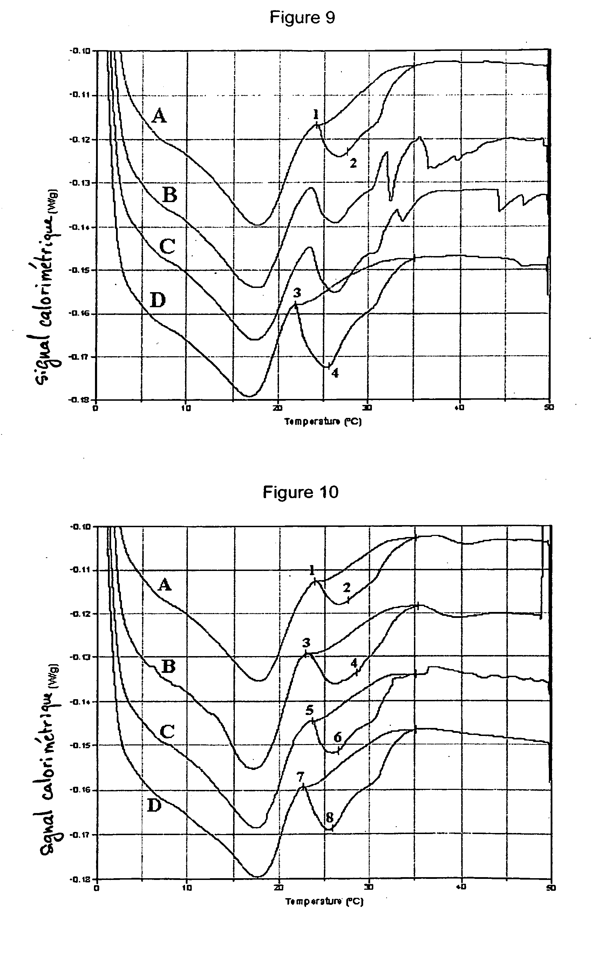

La figure 9 présente le thermogramme pour le « Produit B » standard qui a subi un traitement haute pression (180 secondes à 400 MPa). La courbe A a été réalisée en début du stockage ; la température en début du pic n° (1) est de 24,39°C et au centre du pic n° (2) de 27,64°C. La variation d'enthalpie de fusion des lipides contenus dans la phase de matières grasses est de 1,444 J/g. La courbe B, réalisée à environ 24 heures de stockage, et la courbe C, réalisée à environ 72 heures de stockage, ne sont pas exploitables. La courbe D a été réalisé à environ 160 heures de stockage ; la température en début du pic n° (3) est de 22,05°C et au centre du pic n° (4) de 25,67°C. La variation d'enthalpie de fusion des lipides contenus dans la phase de matières grasses est de 2,482 J/g.
La figure 10 présente le thermogramme pour le « Produit B » auquel a été ajouté 12% (en masse par rapport à la phase aqueuse) d'amidon de blé et qui a subi un traitement haute pression (180 secondes à 400 MPa). La courbe A a été réalisée en début du stockage ; la température en début du pic n° (1) est de 24,31 °C et au centre du pic n° (2) de 27,63°C. La variation d'enthalpie de fusion des lipides contenus dans la phase de matières grasses est de 1,042 J/g. La courbe B a été réalisée à environ 24 heures de stockage ; la température en début du pic n° (3) est de 23,48°C et au centre du pic n° (4) de 28,65°C. La variation d'enthalpie de fusion des lipides contenus dans la phase de matières grasses est de 1,414 J/g. La courbe C a été réalisée à environ 72 heures de stockage ; la température en début du pic n° (5) est de 23,78°C et au centre du pic n° (6) de 26,51°C. La variation d'enthalpie de fusion des lipides contenus dans la phase de matières grasses est de 1,315 J/g. La courbe D a été réalisé à environ 144 heures de stockage; la température en début du pic n° (7) est de 22,86°C et au centre du pic n° (8) de 25,87°C. La variation d'enthalpie de fusion des lipides contenus dans la phase de matières grasses est de 1,775 J/g.

L'analyse de différents thermogrammes permet d'arriver aux mêmes conclusions que pour le « Produit A » quant à l'augmentation de la vitesse de cristallisation et quant à l'amélioration de la texture de la margarine produite.
Le Tableau 4 montre un récapitulatif de l'évolution de température et d'enthalpie de fusion des lipides contenus dans la phase de matières grasses pendant le vieillissement des différentes variantes de « Produit B ».

**Tableau 4 : Récapitulatif de l'évolution de température et d'enthalpie de fusion des lipides contenus dans la phase de matières grasses pendant le vieillissement des différentes variantes de « Produit B »**

| **Produit** | **B Standard** | | **B + 12% Blé** | | **B Standard + HHP** | | **B + 12% Blé + HHP** | |
|---|---|---|---|---|---|---|---|---|
| | **T (°C)** | **E (J/g)** | **T (°C)** | **E (J/g)** | **T (°C)** | **E (J/g)** | **T (°C)** | **E (J/g)** |
| **Courbe A** | 30,14 | 0,939 | 26,81 | 1,106 | 27,64 | 1,444 | 27,63 | 1,042 |
| **Courbe B** | 26,86 | 1,152 | 26,14 | 1,211 | - | - | 28,65 | 1,414 |
| **Courbe C** | 30,16 | 1,069 | 26,52 | 1,039 | - | - | 26,51 | 1,315 |
| **Courbe D** | 25,88 | 1,603 | 25,59 | 1,849 | 25,67 | 2,482 | 25,87 | 1,775 |
| **Moyenne** | **28,26** | **1,19** | **26,27** | **1,30** | **26,66** | **1,96** | **27,15** | **1,39** |
| **Écart type** | **±1,92** | **±0,25** | **±0,46** | **±0,32** | **±0,99** | **±0,52** | **±1,09** | **± 0,26** |

Une nouvelle fois, le « Produit B » standard est le plus instable, les écarts de température et d'enthalpie mesurée par calorimétrie et correspondant au phénomène de fusion de la phase de matières grasses sont de l'ordre de 2°C et de 2 J/g, respectivement. Par contre le « Produit B », auquel a été ajouté 12% (en masse par rapport à la phase aqueuse) d'amidon de blé et qui a subi un traitement haute pression (180 secondes à 400MPa), est le produit le plus stable, les écarts sont de 1 °C et de 0,3 J/g.

Comme conclusion de ces essais semi-industriels, appliqués sur les barquettes des « Produit A » et « Produit B », nous pouvons affirmer que l'ajout d'amidon dans les émulsions et un traitement postérieur par haute pression produisent une accélération significative de la cristallisation des matières grasses et globalement une amélioration de la texture des émulsions analysées.

### Exemple 3 :

Le traitement haute pression a été réalisé sur une émulsion contenant 39% d'une phase aqueuse et 61 % d'une phase grasse. La phase grasse comportait des fractions de matières grasses plus ou moins saturées avec des températures de cristallisation allant de -20°C à +40°C.

Le traitement a été réalisé sur l'émulsion à une pression de 600 MPa, pendant une durée de 10 minutes, dans une enceinte haute pression de volume 3 litres maintenue à la température de 10°C.

L'émulsion a été conditionnée dans des barquettes en PEHD d'un volume de 250 ml.
Un opercule constitué d'un film plastique de polyéthylène a été soudé pour isoler l'emulsion du liquide de pressurisation contenu dans l'enceinte (eau).

La température initiale de l'émulsion avant traitement était comprise entre 10 et 12°C.

Au total 16 barquettes ont été traitées par haute pression (indiquées « HPP »), et 16 barquettes ont été gardées comme référence non traitées (indiquées « Control » pour contrôle).

Après le traitement, les produits ont été mis au réfrigérateur à 4°C pendant 3 semaines.

Des mesures de l'enthalpie de fusion de la phase de matières grasses de l'émulsion ont été réalisées au bout de 3 semaines de stockage à 4°C. Il a été mis en évidence les deux phénomènes suivants :
- l'enthalpie de fusion est plus élevée pour les produits traités par haute pression,
- l'énergie est localisée à des températures plus basses indiquant que très probablement les cristaux de matière grasse qui se sont cristallisés sont plutôt de type ALPHA que de type BETA ou BETA prime.
Il en résulte une texture plus ferme et en principe une cristallisation plutôt sous forme de cristaux ALPHA que BETA ou BETA primes pour lesquels il est connu que la température de fusion est plus élevée. (« Fat Crystal Networks» - A.G. MARANGONI - figure 25 et table 5 Marcel Dekker - New York 2005 ISBN 0-8247-4075-0).

Dans le cadre d'une application industrielle et commerciale, l'émulsion est destinée à être consommée.
En moyenne 3 semaines de stockage dans des conditions industrielles (température basse et stable de l'ordre de 4°C) s'écoulent entre la production et la consommation.
Lors de la phase de consommation, le produit est stocké dans un réfrigérateur domestique et est mis à température ambiante lors des repas (produit mis sur la table). Cela se répercute par une remontée en température qui peut avoir un effet négatif sur la texture du produit. En effet, les cristaux de matière grasse vont fondre et la texture du produit va en être affectée.

Afin de reproduire ce problème, l'émulsion a été sortie de son stockage après 3 semaines de stockage à 4°C.
Puis elle a été mise au contact d'une ambiance à 20°C pendant 1 heure.
Puis elle a été remise en stockage à 6°C (température moyenne d'un réfrigérateur ménager).
Le lendemain, l'émulsion a été sortie du stockage et a été mise à 20°C pendant 30 minutes puis remise en stockage à 6°C.
Cette opération a encore été répétée une nouvelle fois un jour plus tard.
Puis, un test comparatif de la texture a ensuite été réalisé.
Pour ce faire, les mesures de texture ont été réalisées avec un système mesurant la force nécessaire à la pénétration d'un cône en plastique dur (angle 60°) dans une barquette maintenue à 4°C. La force enregistrée en fin de compression (pénétration du cône sur une profondeur de 10 mm dans l'émulsion à une vitesse de 1 mm/s) a été retenue comme une valeur indicative de la texture de l'émulsion. Plus la force est grande, plus la texture est ferme, ce qui est recherché par le consommateur. Une valeur de force correspond à la moyenne de 4 mesures réalisées sur deux barquettes différentes (mesure destructive).

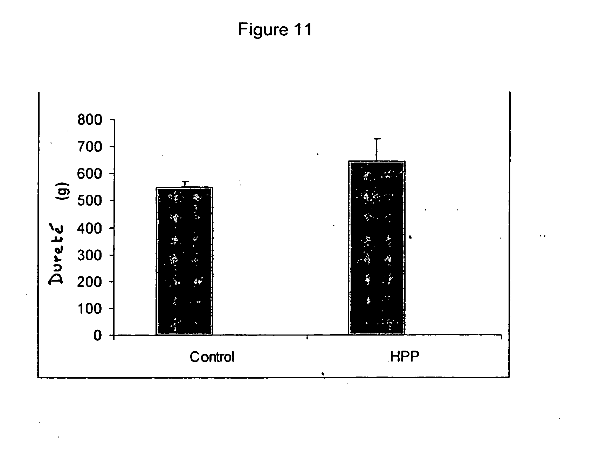

Les résultats comparatifs de la texture obtenus sont consignés à la figure 11 :
- Produit « Control » correspond aux barquettes de contrôle,
- Produit « HPP » correspond aux barquettes ayant été traitées par haute pression.

On constate donc que le produit HPP a conservé une texture plus ferme, mettant en évidence l'intérêt du procédé selon l'invention.

## Revendications

1. Procédé d'amélioration de la texture d'une émulsion préparée à partir d'une phase aqueuse et d'une phase de matières grasses, **caractérisé en ce qu'**un traitement haute pression réalisé à un palier d'une valeur comprise entre 200 et 600 MPa est effectué sur ladite émulsion, dans une enceinte maintenue à température constante, ledit traitement étant suivi d'une phase de réfrigération permettant de finaliser la cristallisation de la phase de matières grasses de ladite émulsion.

2. Procédé d'amélioration de la texture d'une émulsion selon la revendication 1, **caractérisé en ce que** le traitement haute pression suivi de la phase de réfrigération sont effectués après une phase de conditionnement final de ladite émulsion.

3. Procédé d'amélioration de la texture d'une émulsion selon l'une quelconque des revendications 1 à 2, **caractérisé en ce que** le traitement haute pression se fait à un palier d'une valeur comprise entre 400 et 600 MPa.

4. Procédé d'amélioration de la texture d'une émulsion selon l'une quelconque des revendications 1 à 3, **caractérisé en ce que** l'enceinte de traitement haute pression est maintenue à une température inférieure à 40°C.

5. Procédé d'amélioration de la texture d'une émulsion selon l'une quelconque des revendications 1 à 4, **caractérisé en ce que** l'enceinte de traitement haute pression est maintenue à une température comprise entre 0°C et 20°C.

6. Procédé d'amélioration de la texture d'une émulsion selon l'une quelconque des revendications 1 à 5, **caractérisé en ce que** la durée du traitement haute pression est comprise entre quelques dizaines de secondes à quelques dizaines de minutes.

7. Procédé d'amélioration de la texture d'une émulsion selon l'une quelconque des revendications 1 à 6, **caractérisé en ce que** la durée du traitement haute pression est de 3 minutes.

8. Procédé d'amélioration de la texture d'une émulsion selon l'une quelconque des revendications 1 à 7, **caractérisé en ce qu'**il est effectué plusieurs cycles de montée et de descente en pression sans nécessairement revenir à la pression atmosphérique.

9. Procédé d'amélioration de la texture d'une émulsion selon l'une quelconque des revendications 1 à 8, **caractérisé en ce que** un ou plusieurs agents épaississants activables par traitement haute pression sont ajoutés à la phase aqueuse.

10. Procédé d'amélioration de la texture d'une émulsion selon la revendication 9, **caractérisé en ce qu'**il est ajouté entre 0,1% et 20%, de préférence 12% en masse par rapport à la phase aqueuse d'un agent épaississant activable par traitement haute pression.

11. Procédé d'amélioration de la texture d'une émulsion selon l'une quelconque des revendications 9 à 10, **caractérisé en ce que** le ou les agents épaississants activables par traitement haute pression sont choisis dans le groupe composé, entre autres, de la gélatine, des amidons, des hydrocolloïdes tels que les carraghénanes, alginates, et/ou des fibres.

12. Procédé d'amélioration de la texture d'une émulsion selon l'une quelconque des revendications 9 à 12, **caractérisé en ce que** lorsque le ou les agents épaississants activables par traitement haute pression sont des amidons, ils sont choisis parmi des amidons tels que l'amidon de blé, l'amidon de riz, l'amidon d'amaranthus (*Amaranthus cruentus L*), l'amidon de pomme de terre.

13. Procédé d'amélioration de la texture d'une émulsion selon l'une quelconque des revendications 9 à 12, **caractérisé en ce que** le ou les agents épaississants activables par traitement haute pression ont reçu, préalablement à leur dissolution dans la phase aqueuse, un traitement spécifique tel qu'un traitement thermique partiel dans des conditions d'hydratation n'entraînant pas la gélatinisation, un traitement physique de cisaillement ou de détente instantanée contrôlée, un traitement mécanique de broyage spécifique, un traitement par attaque enzymatique dans des conditions d'hydratation adaptées.

14. Procédé d'amélioration de la texture d'une émulsion selon l'une quelconque des revendications 9 à 13, **caractérisé en ce que** le ou les agents épaississants possèdent une distribution de taille particulaire telle que la quantité d'eau disponible dans les gouttelettes qui formeront l'émulsion après l'émulsification et avant le traitement haute pression soit suffisante pour assurer la gélatinisation desdits agents épaississants conduisant à l'obtention d'une viscosité et des propriétés rhéologiques de la phase aqueuse aussi élevées que possibles.

15. Procédé d'amélioration de la texture d'une émulsion selon l'une quelconque des revendications 1 à 14, **caractérisé en ce que** la phase aqueuse contient un ou plusieurs agents épaississants activables par traitement thermique, qui gélatinisent lors du chauffage de ladite phase.

16. Procédé d'amélioration de la texture d'une émulsion selon l'une quelconque des revendications 1 à 15, **caractérisé en ce que** du gaz est dissous dans la phase aqueuse ou dans la phase de matières grasses.

17. Procédé d'amélioration de la texture d'une émulsion selon la revendication 16, **caractérisé en ce que** le gaz dissous est du dioxyde de carbone.

18. Procédé d'amélioration de la texture d'une émulsion selon l'une quelconque des revendications 1 à 17, **caractérisé en ce que** le traitement haute pression est réalisé sur une émulsion disposée dans une barquette en plastique semi-rigide, elle-même disposée dans ladite enceinte.

19. Procédé d'amélioration de la texture d'une émulsion selon la revendication 18, **caractérisé en ce que** le taux de remplissage de ladite barquette en volume est compris entre 80% et 100% du volume de ladite barquette.

20. Procédé d'amélioration de la texture d'une émulsion selon l'une quelconque des revendications 1 à 19, **caractérisé en ce que** l'émulsion est un produit alimentaire, un produit cosmétique ou un produit pharmaceutique.

21. Procédé d'amélioration de la texture d'une émulsion selon la revendication 20 **caractérisé en ce que** lorsque ladite émulsion est un produit alimentaire, elle est une margarine ou du beurre.

22. Procédé d'amélioration de la texture d'une émulsion selon l'une quelconque des revendications 1 à 21, **caractérisé en ce que** ladite émulsion est fabriquée selon un procédé comportant au moins les étapes suivantes :
- une étape de préparation de la phase grasse à chaud,
- une étape de préparation de la phase aqueuse,
- l'addition lente de la phase aqueuse dans la phase grasse sous agitation forte pour créer l'émulsion,
- une étape de pasteurisation,
- une étape de refroidissement et de trituration,
- une étape de conditionnement,
- et une étape de stockage.

23. Procédé selon la revendication 21 ou 22 **caractérisé en ce que** la teneur globale en agents épaississants est d'au moins 6,1% en masse par rapport à la phase aqueuse lorsque l'émulsion est une margarine.

24. Procédé selon l'une quelconque des revendications 21 à 23 **caractérisé en ce que** l'émulsion comprend de 50 à 70% de phase de matières grasses et de 30 à 50% de phase aqueuse.

## Claims

1. A method for improving the texture of an emulsion prepared from an aqueous phase and from a first phase of fats, **characterized in that** a high-pressure treatment performed at a plateau with a value comprised between 200 and 600 MPa, is carried out on said emulsion, in an enclosure maintained at constant temperature, said treatment being followed by a cooling phase, with which the crystallization of the phase of fats of said emulsion may be finalized.

2. The method for improving the texture of an emulsion according to claim 1, **characterized in that** the high-pressure treatment followed by the cooling phase are carried out after a final conditioning phase of said emulsion.

3. The method for improving the texture of an emulsion according to any of claims 1 to 2, **characterized in that** the high-pressure treatment is accomplished at a plateau with a value comprised between 400 and 600 MPa.

4. The method for improving the texture of an emulsion according to any of claims 1 to 3, **characterized in that** the high-pressure treatment enclosure is maintained at a temperature below 40°C.

5. The method for improving the texture of an emulsion according to any of claims 1 to 4, **characterized in that** the high-pressure treatment enclosure is maintained at a temperature between 0°C and 20°C.

6. The method for improving the texture of an emulsion according to any of claims 1 to 5, **characterized in that** the duration of the high-pressure treatment is comprised between a few tens of seconds to a few tens of minutes.

7. The method for improving the texture of an emulsion according to any of claims 1 to 6, **characterized in that** the duration of the high-pressure treatment is 3 minutes.

8. The method for improving the texture of an emulsion according to any of claims 1 to 7, **characterized in that** several increasing and decreasing pressure cycles are carried out without necessarily returning to atmospheric pressure.

9. The method for improving the texture of an emulsion according to any of claims 1 to 8, **characterized in that** one or more thickening agents which may be activated by high-pressure treatment, are added to the aqueous phase.

10. The method for improving the texture of an emulsion according to claim 9, **characterized in that** between 0.1 % and 20%, preferably 12% by mass, based on the aqueous phase of a thickening agent which may be activated by high-pressure treatment are added.

11. The method for improving the texture of an emulsion according to any of claims 9 to 10, **characterized in that** the thickener(s) which may be activated by high-pressure treatment are selected from the group *inter alia* consisting of gelatine, starches, hydrocolloids such as carrageenans, alginates, and/or fibers.

12. The method for improving the texture of an emulsion according to any of claims 9 to 12, **characterized in that**, when the thickener(s) which may be activated by high-pressure treatment, are starches, they are selected from starches, such as wheat starch, rice starch, amaranthus (*Amaranthus cruentus L*) starch, potato starch.

13. The method for improving the texture of an emulsion according to any of claims 9 to 12, **characterized in that** the thickener(s) which may be activated by high-pressure treatment, have received prior to their dissolution in the aqueous phase, a specific treatment such as partial heat treatment under hydration conditions not causing gelatinization, a physical shearing or controlled instantaneous expansion treatment, a specific milling mechanical treatment, a treatment by enzymatic etching under suitable hydration conditions.

14. The method for improving the texture of an emulsion according to any of claims 9 to 13, **characterized in that** the thickener(s) have a particle size distribution such that the amount of water available in the droplets which will form the emulsion after emulsification and before the high-pressure treatment is sufficient for ensuring gelatinization of said thickener(s) leading to obtaining a viscosity and flow properties of the aqueous phase as high as possible.

15. The method for improving the texture of an emulsion according to any of claims 1 to 14, **characterized in that** the aqueous phase contains one or more thickeners, which may be activated by heat treatment, which gelatinize upon heating said phase.

16. The method for improving the texture of an emulsion according to any of claims 1 to 15, **characterized in that** gas is dissolved in the aqueous phase or in the phase of fats.

17. The method for improving the texture of an emulsion according to claim 16, **characterized in that** the dissolved gas is carbon dioxide.

18. The method for improving the texture of an emulsion according to any of claims 1 to 17, **characterized in that** the high-pressure treatment is carried out on an emulsion positioned in a semi-rigid plastic container, itself positioned in said enclosure.

19. The method for improving the texture of an emulsion according to claim 18, **characterized in that** the filling level of said container by volume is comprised between 80% and 100% of the volume of said container.

20. The method for improving the texture of an emulsion according to any of claims 1 to 19, **characterized in that** the emulsion is a food product, a cosmetic product or a pharmaceutical product.

21. The method for improving the texture of an emulsion according to claim 20, **characterized in that** when said emulsion is a food product, it is margarine or butter.

22. The method for improving the texture of an emulsion according to any of claims 1 to 21, **characterized in that** said emulsion is manufactured according to a method including at least the following steps:
- a step for preparing the fat phase under hot conditions,
- a step for preparing the aqueous phase,
- slow addition of the aqueous phase into the fat phase with intensive stirring, for generating the emulsion,
- a pasteurisation step,
- a cooling and trituration step,
- a conditioning step,
- and a storage step.

23. The method according to claim 21 or 22, **characterized in that** the overall content of thickeners is at least the 6.1% by mass based on the aqueous phase when the emulsion is a margarine.

24. The method according to any of claims 21 to 23, **characterized in that** the emulsion comprises from 50 to 70% of fat phase and from 30 to 50% of aqueous phase.

## Patentansprüche

1. Verfahren zur Verbesserung der Textur einer Emulsion, die aus einer Wasserphase und einer Fettphase zubereitet ist, **dadurch gekennzeichnet, dass** die Emulsion unter hohem Druck auf einer Ebene eines Wertes zwischen 200 und 600 MPa inklusive in einem Behälter, der auf konstanter Temperatur gehalten wird, behandelt wird, wobei der Behandlung eine Kühlphase folgt, die es erlaubt, die Kristallisierung der Fettphase der Emulsion abzuschließen.

2. Verfahren zur Verbesserung der Textur einer Emulsion nach Anspruch 1, **dadurch gekennzeichnet, dass** die Hochdruckbehandlung, gefolgt von der Kühlphase, nach einer Phase der abschließenden Konditionierung der Emulsion durchgeführt werden.

3. Verfahren zur Verbesserung der Textur einer Emulsion nach einem der Ansprüche 1 bis 2, **dadurch gekennzeichnet, dass** die Hochdruckbehandlung auf einer Ebene eines Wertes zwischen 400 und 600 MPa erfolgt.

4. Verfahren zur Verbesserung der Textur einer Emulsion nach einem der Ansprüche 1 bis 3, **dadurch gekennzeichnet, dass** der Behälter zur Hochdruckbehandlung auf einer Temperatur unter 40 °C gehalten wird.

5. Verfahren zur Verbesserung der Textur einer Emulsion nach einem der Ansprüche 1 bis 4, **dadurch gekennzeichnet, dass** der Behälter zur Hochdruckbehandlung auf einer Temperatur zwischen 0 °C und 20 °C inklusive gehalten wird.

6. Verfahren zur Verbesserung der Textur einer Emulsion nach einem der Ansprüche 1 bis 5, **dadurch gekennzeichnet, dass** die Dauer der Hochdruckbehandlung zwischen etwa zehn Sekunden bis etwa zehn Minuten inklusive beträgt.

7. Verfahren zur Verbesserung der Textur einer Emulsion nach einem der Ansprüche 1 bis 6, **dadurch gekennzeichnet, dass** die Dauer der Hochdruckbehandlung 3 Minuten beträgt.

8. Verfahren zur Verbesserung der Textur einer Emulsion nach einem der Ansprüche 1 bis 7, **dadurch gekennzeichnet, dass** mehrere Zyklen des Ansteigens und Senkens des Drucks durchgeführt werden, ohne notwendigerweise zum atmosphärischen Druck zurückzukehren.

9. Verfahren zur Verbesserung der Textur einer Emulsion nach einem der Ansprüche 1 bis 8, **dadurch gekennzeichnet, dass** der Wasserphase ein oder mehrere durch Hochdruckbehandlung aktivierbare Verdickungsmittel hinzugefügt werden.

10. Verfahren zur Verbesserung der Textur einer Emulsion nach Anspruch 9, **dadurch gekennzeichnet, dass** zwischen 0,1 Gew.-% und 20 Gew.-%, vorzugsweise 12 Gew.-% im Verhältnis zur Wasserphase, eines durch Hochdruckbehandlung aktivierbaren Verdickungsmittels hinzugefügt wird.

11. Verfahren zur Verbesserung der Textur einer Emulsion nach einem der Ansprüche 9 bis 10, **dadurch gekennzeichnet, dass** das oder die durch Hochdruckbehandlung aktivierbaren Verdickungsmittel aus der Gruppe ausgewählt sind, die unter anderem aus der Gelatine, den Stärken, den Hydrokolloiden wie zum Beispiel den Carrageenen, Alginaten, und/oder den Fasern besteht.

12. Verfahren zur Verbesserung der Textur einer Emulsion nach einem der Ansprüche 9 bis 12, **dadurch gekennzeichnet, dass**, wenn das oder die durch Hochdruckbehandlung aktivierbaren Verdickungsmittel Stärken sind, sie aus den Stärken wie zum Beispiel der Weizenstärke, der Reisstärke, der Amarantstärke (*Amaranthus cruentus L*), der Kartoffelstärke ausgewählt sind.

13. Verfahren zur Verbesserung der Textur einer Emulsion nach einem der Ansprüche 9 bis 12, **dadurch gekennzeichnet, dass** das oder die durch Hochdruckbehandlung aktivierbaren Verdickungsmittel vor ihrer Auflösung in der Wasserphase eine spezielle Behandlung wie zum Beispiel eine teilweise thermische Behandlung unter Hydratisierungsbedingungen erhalten haben, die nicht die Gelierung hervorruft, eine physikalische Behandlung des Scherens oder der kontrollierten Ad-hoc-Entspannung, eine mechanische Behandlung des spezifischen Brechens, eine Behandlung durch enzymatischen Angriff unter geeigneten Hydratisierungsbedingungen.

14. Verfahren zur Verbesserung der Textur einer Emulsion nach einem der Ansprüche 9 bis 13, **dadurch gekennzeichnet, dass** das oder die Verdickungsmittel eine besondere Größenverteilung besitzen, die derart ist, dass die in den Tröpfchen verfügbare Wassermenge, die die Emulsion nach der Emulgierung und vor der Hochdruckbehandlung bilden, ausreichend ist, um das Gelieren der Verdickungsmittel zu gewährleisten, was zu einer Viskosität und rheologischen Eigenschaften der Wasserphase führt, die so ausgeprägt sind wie möglich.

15. Verfahren zur Verbesserung der Textur einer Emulsion nach einem der Ansprüche 1 bis 14, **dadurch gekennzeichnet, dass** die Wasserphase ein oder mehrere Verdickungsmittel enthält, die durch thermische Bearbeitung aktivierbar sind, die während des Erhitzend dieser Phase gelieren.

16. Verfahren zur Verbesserung der Textur einer Emulsion nach einem der Ansprüche 1 bis 15, **dadurch gekennzeichnet, dass** in der Wasserphase oder in der Fettphase Gas gelöst ist.

17. Verfahren zur Verbesserung der Textur einer Emulsion nach Anspruch 16, **dadurch gekennzeichnet, dass** das gelöste Gas Kohlendioxid ist.

18. Verfahren zur Verbesserung der Textur einer Emulsion nach einem der Ansprüche 1 bis 17, **dadurch gekennzeichnet, dass** die Hochdruckbehandlung bei einer Emulsion durchgeführt wird, die in einer halbstarren Kunststoffschale angeordnet ist, die selbst in dem Behälter angeordnet ist.

19. Verfahren zur Verbesserung der Textur einer Emulsion nach Anspruch 18, **dadurch gekennzeichnet, dass** der volumenmäßige Füllgrad der Schale zwischen 80 % und 100 % des Volumens der Schale beträgt.

20. Verfahren zur Verbesserung der Textur einer Emulsion nach einem der Ansprüche 1 bis 19, **dadurch gekennzeichnet, dass** die Emulsion ein Lebensmittelprodukt, ein kosmetisches Produkt oder ein pharmazeutisches Produkt ist.

21. Verfahren zur Verbesserung der Textur einer Emulsion nach Anspruch 20, **dadurch gekennzeichnet, dass**, wenn die Emulsion ein Lebensmittelprodukt ist, sie eine Margarine oder Butter ist.

22. Verfahren zur Verbesserung der Textur einer Emulsion nach einem der Ansprüche 1 bis 21, **dadurch gekennzeichnet, dass** die Emulsion gemäß einem Verfahren hergestellt wird, das zumindest die folgenden Schritte aufweist:
- einen Schritt der Vorbereitung der Fettphase unter Hitze,
- einen Schritt der Zubereitung der Wasserphase,
- das langsame Hinzufügen der Wasserphase zur Fettphase unter starkem Rühren, um die Emulsion zu bilden,
- einen Schritt der Pasteurisierung,
- einen Schritt der Abkühlung und des Zerkleinerns,
- einen Schritt des Verpackens,
- und einen Schritt des Lagerns.

23. Verfahren nach Anspruch 21 oder 22, **dadurch gekennzeichnet, dass** der allgemeine Gehalt an Verdickungsmitteln mindestens 6,1 Gew.-% im Verhältnis zur Wasserphase beträgt, wenn die Emulsion eine Margarine ist.

24. Verfahren nach einem der Ansprüche 21 bis 23, **dadurch gekennzeichnet, dass** die Emulsion 50 bis 70 % Fettphase und 30 bis 50 % Wasserphase umfasst.
